# EUROPÄISCHE PATENTSCHRIFT

(11) **EP 2 238 366 B1**
(45) Veröffentlichungstag und Bekanntmachung des Hinweises auf die Patenterteilung: **11.05.2011**
(21) Anmeldenummer: 08865687.1
(22) Anmeldetag: 29.10.2008
(51) Int. Cl.: F16D 23/06

(54) **REIBRING**
FRICTION RING
BAGUE DE FRICTION

(30) Priorität: 22.12.2007 DE 102007062467
(43) Veröffentlichungstag der Anmeldung: 13.10.2010
(73) Patentinhaber: Schaeffler Technologies GmbH & Co. KG, 91074 Herzogenaurach (DE)
(72) Erfinder: KARAIS, Thomas, 90449 Nürnberg (DE); SCHARF, Till, 72760 Reutlingen (DE); KOHTES, Pascal, 90491 Nürnberg (DE); PRIWITZER, Günther, 91077 Hetzles (DE); SCHÜBEL, Rainer, 91589 Aurach (DE); WITTMANN, Raphael, F-67620 Soufflenheim (FR)
(86) Internationale Anmeldenummer: PCT/EP2008/064648
(87) Internationale Veröffentlichungsnummer: WO 2009/080397

(56) Entgegenhaltungen:
- DE-A1- 3 705 657
- US-A- 2 395 189
- US-A- 4 732 247

## Beschreibung

### Gebiet der Erfindung

Die Erfindung betrifft einen Reibring für Kupplungen oder Synchronisiereinrichtungen mit einem Ringkörper, welcher mehrere Ausnehmungen aufweist, wobei in den Ausnehmungen Reibelemente angeordnet sind.

### Hintergrund der Erfindung

Reibringe eines Fahrzeuggetriebes sind in der Regel durch einen zylindrisch oder konisch ausgebildeten Ring mit Reibflächen an der Innenmantelfläche oder der Außenmantelfläche gebildet. Weist der Reibring Reibflächen auf beiden Mantelflächen auf, bezeichnet man ihn auch als Zwischenring. Die Reibflächen eines Zwischenrings stehen während des Kupplungsvorgangs am Außenmantel reibschlüssig mit einer an einem äußeren Gegenkonus ausgebildeten Reibfläche in Verbindung. Gleichzeitig steht eine an der Innenmantelfläche des Zwischenrings ausgebildete Reibfläche mit einer Reibfläche eines inneren Gegenkonus' im Reibschluss.

Bei einer Synchronisiereinrichtung ist der äußere Synchronring formschlüssig mit einem Synchronkörper verbunden und greift beispielsweise über Mitnehmernasen, die an seiner im Durchmesser kleineren Seite ausgebildet und radial nach innen gerichtet sind, in Aussparungen des inneren Synchronringes. Der innere Synchronring ist somit über den äußeren Synchronring ebenfalls formschlüssig mit dem Synchronkörper verbunden.

Eine derartige Synchronisiereinrichtung besteht aus vielen Einzelteilen und ist daher aufwendig herzustellen. Für die Massenfertigung hat es sich als geeignet erwiesen, Synchronringe umformtechnisch aus Blech spanlos herzustellen. Die umformtechnisch hergestellten Ringe weisen jedoch zumeist eine Reibfläche auf, die den erforderlichen Genauigkeiten nicht genügt. In der Regel ist daher eine spanende Nachbearbeitung oder ein Honen erforderlich. Wird ein Reibbelag auf eine Reibfläche aufgeklebt, so übertragen sich eventuelle Ungenauigkeiten des Ringkörpers auf die Reibfläche, die wiederum nachgearbeitet werden muss. Das Aufbringen eines Reibbelags durch beispielsweise Kleben ist daher aufwändig und kostenintensiv.

Bei einem derartigen Synchronringpaket steigt während des Synchronisiervorganges der Reibwert kontinuierlich an und erreicht seinen maximalen Wert am Ende des Synchronisiervorganges. Dies ist prinzipbedingt, da sich zu Beginn des Synchronisierungsvorganges noch relativ viel Öl zwischen den Synchronringen befindet, so dass der Reibwert relativ gering ist. Im Verlauf des Synchronisationsvorgangs wird das Öl verdrängt, was durch den Einsatz von Nuten unterstützt werden kann, woraus eine Erhöhung des Reibwerts folgt. Am Ende des Synchronisationsprozesses, wenn das Öl praktisch vollständig verdrängt ist, baut sich die maximale Reibung auf. Gerade zum Ende des Synchronisationsvorganges ist es allerdings wünschenswert, dass der Reibwert sinkt, dass das Synchronringpaket leichter voneinander zu lösen ist und die Schiebemuffe in die Verzahnung des Außenringes einspuren kann. Andererseits existieren Reibkupplungen, bei denen am Ende des Kupplungsprozesses ein Reibschluss hergestellt sein soll. Hier kann eine besonders hohe Reibkraft am Ende des Kupplungsvorgangs von Nutzen sein.

Ebenso ist es bei anderen Kupplungseinrichtungen wie Lamellenkupplungen wünschenswert, die Reibeigenschaften des Systems während des Einkuppelns zu beeinflussen.

Dokument US-A 4732247 offenbart einen Reibring gemäß dem Stand der Technik.

### Aufgabe der Erfindung

Der Erfindung liegt daher die Aufgabe zugrunde, die vorstehend beschriebenen Nachteile zu beseitigen und somit die Reibung insbesondere gegen Ende des Kupplungsvorganges zu vermindern.

Erfindungsgemäß wird diese Aufgabe durch eine Vorrichtung gemäß dem Oberbegriff des Anspruchs 1 mittels des kennzeichnenden Teils des Anspruchs 1 dadurch gelöst, dass im unbelasteten Zustand erste Reibflächen aus der Ebene des Ringkörpers weiter vorstehen als zweite Reibflächen, die erst im Verlauf des Kupplungsprozesses, typischerweise bei Überschreitung einer vorbestimmten Schwelle, mit dem Reibpartner zusammenwirken.

Die Erfindung wird nachfolgend anhand einer Synchronisiereinrichtung als Sonderfall einer Kupplung beschrieben; der erfindungsgemäße Reibring kann daher beispielsweise als ein Außensynchronring oder als Zwischensynchronring ausgebildet sein. Die Übertragung auf eine Fahrzeugkupplung zum Entkoppeln des Antriebsstranges von der Brennkraftmaschine oder anderen Kupplungen gelingt dem Fachmann aber problemlos. Der Ringkörper ist je nach Anwendungsfall daher konisch oder zylindrisch ausgebildet.

Wird ein Gang geschaltet, so wird der Synchronring axial verschoben. Er liegt sowohl am Synchronkörper als auch am Gegenkonus, der direkt oder indirekt mit dem Gangrad verbunden ist, an. Beim Ansynchronisieren werden zunächst die weiter vorstehenden Reibflächen belastet und erst im weiteren Fortschreiten des Synchronisationsvorganges tragen alle Reibflächen zur Synchronisation bei. Dadurch ist es möglich, den Reibwertverlauf gezielt zu beeinflussen. Insbesondere ist es möglich, gegen Ende des Synchronisationsvorganges den Reibwert zu reduzieren, um das Synchronringpaket leichter zu lösen und das Einspuren der Schiebemuffe in die Verzahnung des Synchronaußenringes zu erleichtern. Die Reibflächen können ihre Position bezüglich des Ringkörpers um ein kleines Spiel ändern, wodurch es möglich ist, Fertigungsungenauigkeiten des Ringkörpers als auch die des Gegenkonus auszugleichen. Eine Nachbearbeitung des Ringkörpers sowie die Nachbearbeitung der im Reibschluss stehenden Gegenflächen ist damit entbehrlich, was eine günstigere Herstellung des Synchronrings bzw. der die Gegenkonen tragenden Bauteile ermöglicht.

Die ersten und zweiten Reibflächen können sowohl auf einem Reibelement angeordnet sein als auch auf verschiedenen Reibelementen. Ein Beispiel für die Anordnung auf verschiedenen Reibelementen sind verschiedene Reibelemente, die im unbelasteten Zustand des Reibrings radial unterschiedlich aus der Ebene des Ringkörpers hervorstehen, wobei die weiter vorstehenden Reibelemente entweder einfedern können, elastisch sind oder auf sonstige Weise verschiebbar sind. Die Reibelemente sind in den Ausnehmungen oder Taschen des käfigförmigen Ringkörpers, verschiebbar und/oder verdrehbar gehalten.

In einer Weiterbildung der Erfindung weisen die Reibelemente und eine unterschiedliche geometrische, im mathematischen Sinne nicht ähnliche Gestalt auf. Dadurch dass die ersten Reibelemente zum Reibpartner gerichtet hervorstehen, werden diese beim Synchronisieren zuerst belastet. In einer Ausführungsform weisen diese Reibelemente einen besonders hohen Reibwert auf. Da ihre Radialerstreckung größer ist, wirkt die komplette Synchronisationskraft auf ihre Fläche. Dadurch steigt die Reibung im System zunächst schlagartig. Aufgrund ihrer Elastizität geben die dickeren Reibelemente nach einer kurzen Zeit nach. Im folgenden tragen dann alle Reibelemente. Die Normalkraft verteilt sich auf alle Reibelemente, und die ersten Reibelemente mit dem hohen Reibwert werden entlastet.

Durch diesen Effekt wird es möglich, die Reibeigenschaften des Kupplungssystems gezielt zu beeinflussen. Dies kann mittels unterschiedlicher Werkstoffe, Geometrien, Anzahl oder Anordnung der Reibelemente auf dem Reibkörper realisiert werden.

In einer Weiterbildung der Erfindung weisen daher die Reibelemente mit größerem Reibwert eine größere radiale Bauhöhe auf als die Reibelemente mit niedrigerem Reibwert. Die Reibelemente mit dem größeren Reibwert bestehen dabei aus Werkstoffen, die eine gewisse Elastizität aufweisen und sich unter Last zumindest minimal verformen können. Besonders geeignet sind hierfür Phenolharze oder Kunststoffmaterialien.

Die Erfindung ist nicht auf den einen Satz zweiter unterschiedlicher Reibelemente eingeschränkt. Ebenso können drei oder eine Vielzahl von verschiedenen Reibelementen verwendet werden, die optional alle eine unterschiedliche geometrische Gestalt aufweisen.

In einer anderen Ausführungsform weisen die Reibelemente mit größerem Reibwert eine geringere radiale Bauhöhe auf als die Reibelemente mit niedrigerem Reibwert. In einem derartigen System ist es möglich, die Reibung zum Schluss des Kupplungsprozesses gezielt zu erhöhen.

Alternativ dazu sind zumindest die ersten Reibelemente angefedert. Dies ermöglicht auch die Verwendung von gleichen Reibelementen für jede Ausnehmung des Ringkörpers, da die unterschiedliche Radialerstreckung durch ein Federsystem realisiert wird. Die unterschiedlichen Federsysteme für die ersten Reibelemente und die zumindest zweiten Reibelemente sorgen dafür, dass die Reibelemente mit dem höheren Reibwert zunächst zum Einsatz kommen und reiben. Erst wenn die Federkraft dieser ersten Reibelemente überwunden ist, beginnen alle Reibelemente zu tragen.

Es hat sich herausgestellt, dass es besonders günstig ist, die ersten Reibelemente, die radial weiter hervorstehen, umfangsseitig gleichmäßig über den Ringkörper verteilt anzuordnen. Eine derartige Anordnung nimmt die eingeleitete Normalkraft besonders gleichmäßig auf und minimiert den Verschleiß.

Alle Reibelemente sind im begrenzten Maße axial verschiebbar bzw. verdrehbar. Dadurch wird erreicht, das der Ring sich nicht nur über ein einziges Reibelement an der Gegenfläche abstützt, sondern über alle vorgesehenen Reibelemente. Dies ermöglicht eine hohe Tragfähigkeit der Reibkupplung. Vorzugsweise sind die Reibelemente ballig ausgeführt, so dass sie beidseitig tragen können.

Die Ausnehmungen des Synchronrings sind als Taschen oder Fenster der Form der Reibelemente angepasst. In einer Weiterbildung der Erfindung sind die Taschen größer als die Reibelemente ausgebildet und weisen an zumindest einer Seite Haltenasen auf, welche die Reibelemente führen. Die Haltenasen können auch als ein oder mehrere Haltepunkte allgemein ausgebildet sein. Bei der Herstellung durch Stanzen lassen sich auch komplexe Formen einfach realisieren. Alternativ dazu weisen die Reibelemente Vorsprünge auf, über die die Reibelemente mit dem Ringkörper in Wirkverbindung steht. Die Reibelemente können in die Taschen eingeclipst sein.

In einer vorteilhaften Ausführungsform der Erfindung ist der Ringkörper spanlos und umformtechnisch aus Blech hergestellt. In diesem Fall ist es vorteilhaft, die Ausnehmungen in den Ringkörper einzubringen, bevor der Synchronring beispielsweise durch Tiefziehen in seine endgültige Form gebracht wird. In besonders einfacher Weise wird dünnwandiges Blechmaterial verwendet, aus dem die Ausnehmungen ausgestanzt werden.

Die Reibelemente werden separat von dem Ringkörper hergestellt und gleichzeitig oder nacheinander maschinell mit dem Ringkörper verbunden. Sie können sehr kostengünstig hergestellt werden, da es in der Massenfertigung nicht auf genaue Maßhaltigkeit ankommt, da die Fertigungsungenauigkeiten durch die erfindungsgemäße Anordnung kompensiert werden.

In einer Weiterbildung der Erfindung weisen die Reibelemente eine konvexe Oberfläche auf. Sie können beispielsweise sphärisch nach außen sowie innen gewölbt sein, wobei die Krümmung in radialer Richtung nicht wesentlich von der des Synchronringes abweicht. Die konvexe Form vermeidet ein Abstützen der Reibkörper bei Verkippen an Körperkanten, so dass durch eine flächenförmige Anlage die lokalen Belastungen sinken.

Die Erfindung ermöglicht weiterhin, dass für verschiedene Einsatzzwecke der gleiche Ringkörper verwendet werden kann. Für die jeweilige Anwendung können dann gemäß dem Baukastenprinzip jeweils die geeigneten Reibelemente zugepaart werden. Abweichend von bisherigen beschichteten Zwischenringen lassen sich erfindungsgemäß auch verschiedene Reibmaterialien auf einfache Weise in derselben Synchronisiereinrichtung verwenden. Dazu werden Reibelemente aus verschiedenen Werkstoffen jeweils abwechselnd in die Ausnehmungen platziert.

Als geeignete Werkstoffe für die Reibelemente haben sich vor allem Sintermaterial, aus Messingmaterial, Karbon und Stahl erwiesen. Die Reibelemente können entweder ganz aus dem Reibmaterial bestehen. Sie können aber auch aus einem Werkstoff aufgebaut sein, der mit einem anderen Werkstoff beschichtet wird. Geeignete Werkstoffe für die Reibelemente sind Phenolharze und Kunststoffe. Im Gegensatz zu Reibringen des Standes der Technik können auch Reibmaterialien verwendet werden, die nicht mit dem Material des Ringkörpers verbindbar sind, sei es aufgrund des Herstellungsprozesses oder aufgrund von unterschiedlichen Stoffeigenschaften wie stark differierender Wärmeausdehnungskoeffizienten.

In einer Weiterbildung der Erfindung sind die Reibelemente im verbauten Zustand voneinander in Umfangsrichtung beabstandet. Dadurch sind von den axialen Enden des Synchronrings jeweils in axialer Richtung verlaufend Nuten gebildet. Die Nuten dienen zur Aufnahme des Öls, welches bei dem Synchronisationsprozess abgeführt werden muss. Es müssen daher keine Nuten in den Reibbelag zur Ölabfuhr eingebracht werden, was einen Bearbeitungsschritt spart. Außerdem ist dies insbesondere bei spröden Materialien wie dem häufig verwendeten Sintermaterial von Vorteil, da Nuten hier nur schwierig einbringbar sind. Um die Ölabfuhr während der Synchronisierung zu unterstützen, können die Reibelemente dennoch mit Strukturflächen versehen sein. Die Strukturflächen dienen ebenfalls der Verbesserung der tribologischen Eigenschaften. Hierbei kann es sich beispielsweise um kreuzweise eingebrachte kleine Ölrillen handeln.

Es hat sich herausgestellt, dass das Verhältnis von zweiten zu ersten Reibelementen von Bedeutung ist für den Reibwertverlauf des Systems. Eine besonders gute Abstimmung wird erreicht, wenn das Verhältnis von zweiten zu ersten Reibelementen mindestens 4 : 1 beträgt, weil dann in fast allen Fällen ein besonders leichtes Lösen der Schiebemuffe möglich ist.

In einer Ausführungsform der Erfindung sind alle Reibelemente gleichmäßig um den Umfang des Ringkörpers angeordnet. In einer anderen Ausführungsform weist der Ringkörper Mitnehmernocken als Lappen auf, mit denen er in andere Synchronisationsbauteile eingreift. Die Bereiche des Ringkörpers, die an den Mitnahmenocken angrenzen, sind besonders belastet. Es ist daher in einer Ausgestaltung der Erfindung vorgesehen, in diesen Bereichen keine Taschen bzw. Reibelemente anzuordnen, sondern den Ring aus Vollmaterial zu belassen. Die Reibeigenschaften des Gesamtsystems werden damit nur unwesentlich verändert.

Der Reibring kann aber auch ohne Mitnehmernocken ausgebildet sein und in eine Synchronisationsvorrichtung oder Kupplungseinrichtung einfach eingelegt werden. Er kann nur zum Synchronisieren verwendet werden oder auch in einer Kupplung dauerhaft Momente übertragen.

Die Erfindung betrifft auch eine Synchronisierung mit einem Synchronring nach Anspruch 1 und einem eine Gegenreibfläche aufweisenden Gegenkonus. Der Gegenkonus kann beispielsweise direkt am Gangrad angeordnet sein oder direkt am Synchronkörper. Durch die Bewegungsfreiheit in dem Ringkörper können auch Fertigungsungenauigkeiten dieser Gegenflächen aufgenommen werden, so dass es nicht erforderlich ist, diese nachzuarbeiten. Hierdurch wird eine Kostenersparnis ebenfalls bei den anderen Bauteilen der Synchronisiereinrichtung erreicht.

Anstatt in einer Synchronisiereinrichtung kann ein derartig ausgebildeter Ringkörper mit den Reibelementen auch in einer Kupplung wie einer Lamellenkupplung eingesetzt sein. Schließlich bezieht sich die Erfindung auch auf den Ringkörper mit den Reibelementen selbst.

Die Erfindung ermöglicht es, in einfacher Weise einen Reibring für eine Kupplung bereitzustellen, der an vielen Stellen gleichzeitig trägt, einen geringen Verschleiß und ein gutes Einlaufverhalten aufweist, wobei eine kontrollierte Änderung der Reibeigenschaften des Systems während des Kupplungsvorganges gewährleistet ist. Durch die verschiedenen, miteinander kombinierbaren Werkstoffe für die Reibelemente in Verbindung mit dem während des Kupplungsvorgangs zu unterschiedlichen Zeitpunkten unterschiedlich tragenden Reibflächen lässt sich ein gezielter Reibwertverlauf einstellen, der nicht an den klassischen Reibwertverlauf (während des Kuppelns stets ansteigend) gebunden ist.

Die einzelnen Ausgestaltungen der Erfindung können selbstverständlich miteinander kombiniert werden.

### Kurze Beschreibung der Zeichnungen

Die Erfindung wird nachfolgend anhand mehrerer Zeichnungen erläutert. Es zeigen:
- Figur 1: einen Querschnitt einer Synchronisiereinrichtung,
- Figur 2: einen Ausschnitt eines Querschnitts einer erfindungsgemäßen Synchronisiereinrichtung mit einem Synchronaußenring, einem Zwischenring und einem Synchroninnenring,
- Figur 3: eine perspektivische Ansicht des Ringkörpers eines Zwischenrin- ges ohne Reibelemente,
- Figur 4: eine perspektivische Ansicht des Ringkörpers eines anderen Zwi- schenringes mit Reibelementen,
- Figur 5: eine schematische Darstellung der Reibelemente in einem Feder- system,
- Figur 6: einen Ausschnitt eines.Ringkörpers mit Reibelementen, die ange- federte Reibflächen aufweisen,
- Figur 7: einen schematischen Querschnitt mit unterschiedlich großen Reibelementen und
- Figur 8: einen Ausschnitt eines weiteren Ringkörpers mit Reibelementen, die angefederte Reibflächen aufweisen,
- Figur 9: ein weiteres Reibelement mit zwei verschiedenen Werkstoffen.

### Detaillierte Beschreibung der Zeichnungen

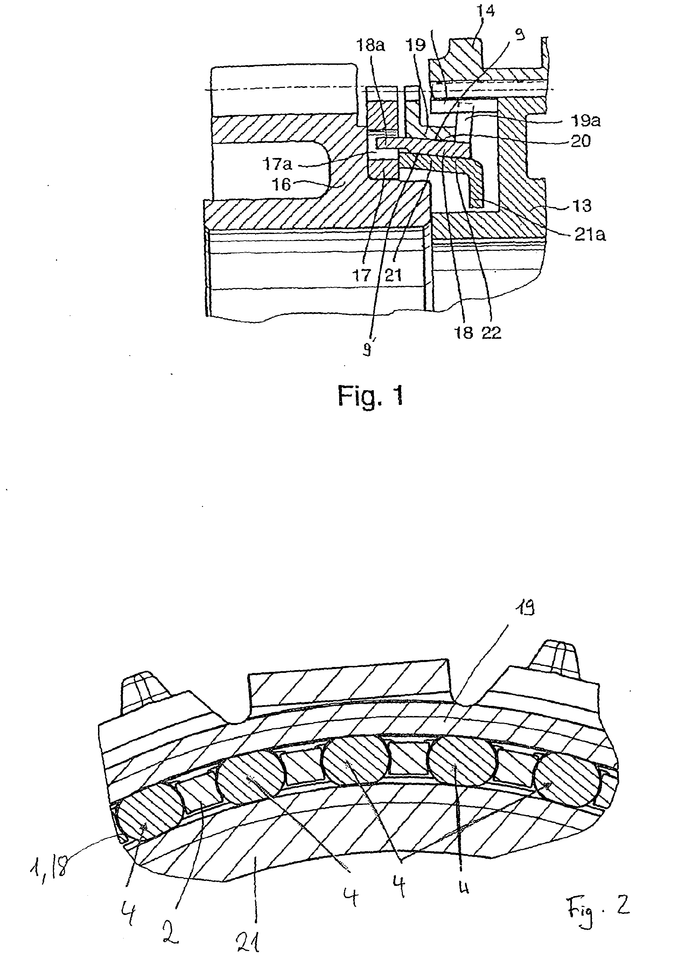

Figur 1 zeigt beispielhaft eine Synchronisiereinrichtung mit einem äußeren Synchronring 19, einem Synchronzwischenring 18 und einem inneren Synchronring 21. Ein Synchronkörper 13 ist mit einer Innenverzahnung zur verdrehfesten Anordnung auf einer Getriebewelle fixiert. Neben dem Synchronkörper 13 ist ein Gangrad 16 angeordnet. Mit dem Gangrad 16 ist ein Kupplungskörper 17 verbunden, in dessen Aussparungen 17a Mitnehmernocken 18a eines Zwischenringes 18 eingreifen. Der Zwischenring 18 bildet mit der Gegenreibfläche 9 des äußeren Synchronrings 19 als ein Gegenkonus 8 eine erste Reibpaarung 20 und mit der Gegenreibfläche 9' des inneren Synchronrings 21 eine zweite Reibpaarung 22. Die Gegenreibflächen 9 und 9' sind nicht nachbearbeitet. Die Verbindung vom Gangrad 16 und Synchronkörper 13 erfolgt über die Schiebemuffe 14.

Der Innenbord 21 a des inneren Synchronrings 21 ist von Aussparungen unterbrochen und teilweise durch einen Absatz des Synchronkörpers 13 verdeckt. Der Absatz greift in die Aussparungen ein, und der innere Synchronring 21 ist somit formschlüssig mit dem Synchronkörper 13 verbunden. Der äußere Synchronring 19 ist über seinen Bord formschlüssig mit dem Synchronkörper 13 verbunden. Der Formschluss des äußeren Synchronrings 19 mit dem Synchronkörper 13 erfolgt über Aussparungen 19a seines Bordes.

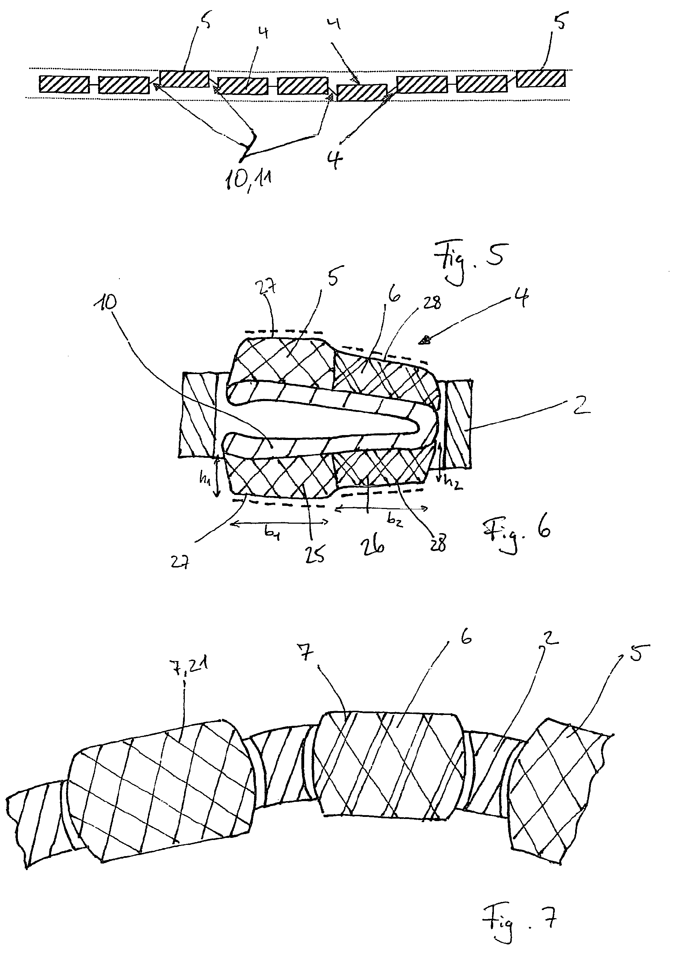

Figur 2 zeigt einen äußeren Synchronring 19 und einen inneren Synchronring 21, wobei zwischen diesen Ringen der Ringkörper 2 mit Reibelementen 4 in Ausnehmungen 3 als Zwischenring 18 angeordnet ist. Die Reibelemente 4 können einfedern, so dass je nach ausgeübten Druck auf das Synchronringpaket 23 einige oder alle Reibelemente 4 tragen. Eine überhöhte Darstellung einer derartigen Anordnung geht auch aus Figur 7 hervor. Das mittlere, zweite Reibelement 6 ist kleiner ausgebildet als die beiden äußeren, ersten Reibelemente 5. Federn die ersten Reibelemente 5 radial ein, trägt auch das zweite Reibelement 6.

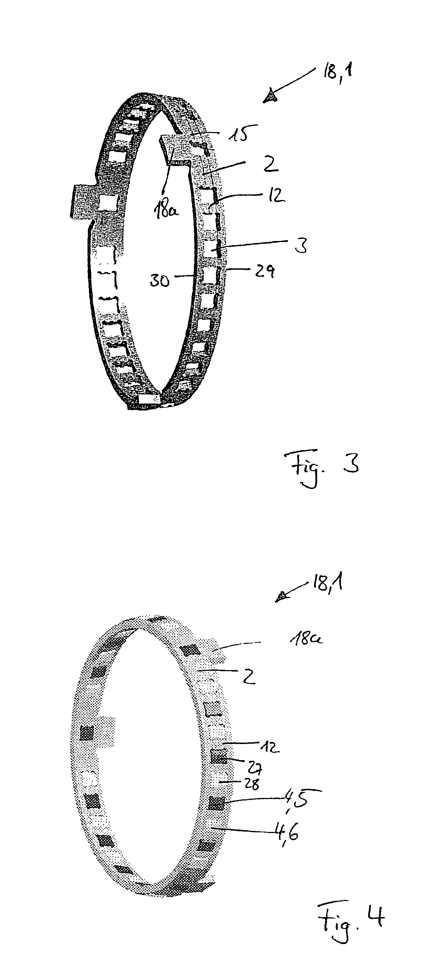

Die Figuren 3 und 4 zeigen jeweils einen Synchronring 1 als Zwischensynchronring 18 mit einem Ringkörper 2 und Ausnehmungen 3, die nahezu rechteckförmig ausgebildet sind. Dabei sind die Ausnehmungen äquidistant angeordnet und verlaufen in axialer Richtung. Im Tragbereich 15 der Mitnehmernocken 18a fehlen bei dem Zwischensynchronring 18 der Figur 3 die Ausnehmungen 3, um die über die Mitnehmernocken 18a eingeleiteten Kräfte sicher aufnehmen zu können. Die Reibleistung wird dadurch nur unwesentlich gemindert. Zwischen den Ausnehmungen 3 bildet das Grundmaterial des Ringkörpers Nuten 12 von einem ersten axialen Ende 29 zu einem zweiten axialen Ende 30, die das Öl ableiten. Das Spiel der Reibelemente 4 in den Ausnehmungen beträgt etwa ein Millimeter.

Bei dem Synchronring der Figur 4 sind die ersten Reibelemente 5 und zweiten Reibelemente 6 jeweils benachbart angeordnet. Der Synchronring 1 weist also genauso viele erste wie zweite Reibelemente auf.

Das der Erfindung zugrunde liegende Prinzip ist in Figur 5 schematisch dargestellt. Die Reibelemente 4 bilden miteinander ein Koppelsystem, so dass die Momente zunächst von den in der Zeichnung weiter oben liegenden Reibelementen 5 aufgenommen werden. Beim Schalten der Kupplung federn die ersten Reibelemente 5 ein, so dass auch weitere Reibelemente zum Tragen kommen. Diese Wechselwirkung ist durch die Kopplung 11 dargestellt, die mittels einer Feder 10 erfolgt. Die Kopplung kann entweder zwischen verschiedenen Reibelementen (Figur 7) erfolgen oder innerhalb eines Reibelements (Figur 6) realisiert sein.

Figur 6 zeigt ein Reibelement 4 in einem Ringkörper 2, wobei eine Formfeder 10 aus Stahl verschiedene erste und zweite Beschichtungen mit Reibmaterialien 25, 26 aufweist. Sowohl die Beschichtungsstärken h₁ und h₂ als auch die Beschichtungsmaterialien 25, 26 können gleich oder unterschiedlich ausgebildet sein. Die Formfeder 10 ist im Wesentlichen V-förmig und federt beidseitig in Richtung Ringkörper 2 ein. Wird die Feder 10 durch einen Reibpartner belastet, so erfolgt die Reibung zunächst nur mit der ersten Reibschicht 25 und erst im weiteren Verlauf mit der Reibschicht 26. Die Reibeigenschaften des Systems können durch unterschiedliche Federn 10, Federstärken, Reibbeschichtungen 25, 26, Breite b₁ und b₂ der aufgetragenen Reibbeschichtungen und Materialwahl sowie durch die Kombination verschiedener Reibelemente gezielt beeinflusst werden.

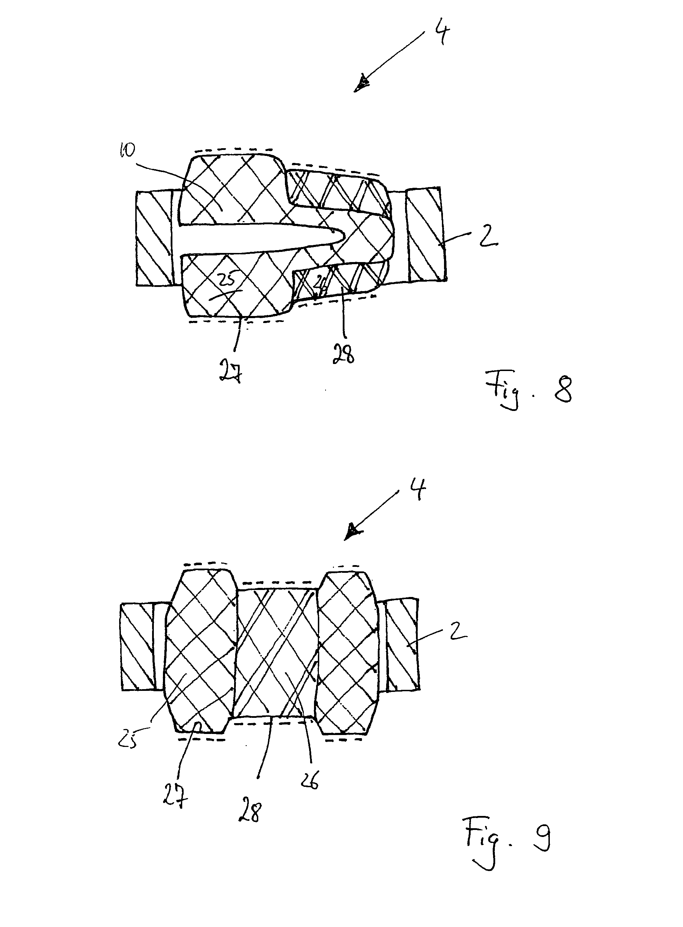

Anstatt einer Formfeder 10 kann das Reibelement 4 auch aus dem Reibmaterial der ersten Reibbeschichtung 25 selbst gebildet sein und an seiner Oberfläche teilweise eine zweite Reibbeschichtung 26 aufweisen (Figur 8). Auch in der Variante nach Figur 9 ist das Reibelement 4 aus zwei verschiedenen Reibmaterialien 25, 26 aufgebaut, wobei im verbauten Zustand sich die Reibmaterialien axial über die gesamte Breite des Reibelements 4 erstrecken. Das erste Reibmaterial 25 weist eine größere axiale Erstreckung auf und kann axial einfedern, so dass das zweite Reibmaterial 26 mit trägt. Die Reibmaterialien 25, 26 sind miteinander verbunden.

### Bezugszahlenliste

- 1: Reibring
- 2: Ringkörper
- 3: Ausnehmung
- 4: Reibelement
- 5: erstes Reibelement
- 6: zweites Reibelement
- 7: Strukturfläche
- 8: Gegenkonus
- 9,9': Gegenreibfläche
- 10: Federelement
- 11: Kopplung
- 12: Nut
- 13: Synchron körper
- 14: Schiebemuffe
- 15: Tragbereich
- 16: Gangrad
- 17: Kupplungskörper
- 17a: Aussparung
- 18: Zwischenring
- 18a: Mitnehmernocken
- 19: äußerer Synchronring
- 19a: Aussparung
- 20: erste Reibpaarung
- 21: innerer Synchronring
- 21 a: Innenbord
- 22: zweite Reibpaarung
- 23: Synchronringpaket
- 24: Ölrille
- 25: erstes Reibmaterial
- 26: zweites Reibmaterial
- 27: erste Reibfläche
- 28: zweite Reibfläche
- 29: axiales Ende
- 30: axiales Ende

## Patentansprüche

1. Reibring (1) für eine Kupplung, insbesondere für eine Synchronisiereinrichtung eines Kraftfahrzeuggetriebes, mit einem Ringkörper (2), wobei der Ringkörper (2) mehrere Ausnehmungen (3) aufweist und in den Ausnehmungen (3) Reibelemente (4) angeordnet sind, der Ringkörper (2) einen Käfig bildet, der die Reibelemente (4) in den Ausnehmungen (3) führt, wobei die Reibelemente (4) in den Ausnehmungen (3) verschiebbar und/oder verdrehbar angeordnet sind, **dadurch gekennzeichnet, dass** im unbelasteten Zustand erste Reibflächen (27) aus der Ebene des Ringkörpers (2) weiter vorstehen als zweite Reibflächen (28) und bei Überschreiten einer vorbestimmten Belastung alle Reibflächen (27, 28) in Reibkontakt mit einem Reibpartner (19, 21) bringbar sind.

2. Reibring nach Anspruch 1, **dadurch gekennzeichnet, dass** die Reibelemente (4) als zumindest erste Reibelemente (5) und zweite Reibelemente (6) ausgebildet sind, wobei die ersten Reibelemente (5) im unbelasteten Zustand aus der Ebene des Ringkörpers (2) in Bezug auf den Reibpartner weiter hervorstehen als die zweiten Reibelemente (6).

3. Reibring nach Anspruch 2, **dadurch gekennzeichnet, dass** die ersten Reibelemente (5) einen höheren Reibwert aufweisen als die zweiten Reibelemente (6).

4. Reibring nach Anspruch 2, **dadurch gekennzeichnet, dass** die ersten Reibelemente (5) einen niedrigeren Reibwert aufweisen als die zweiten Reibelemente (6).

5. Reibring nach Anspruch 1, **dadurch gekennzeichnet, dass** die Reibelemente (4) elastisch ausgebildet sind.

6. Reibring nach Anspruch 1, **dadurch gekennzeichnet, dass** die Höhendifferenz zwischen den ersten Reibelementen (5) und den zweiten Reibelementen (6) in Richtung des Reibpartners gemessen im unbelasteten Zustand so ausgebildet ist, dass sich die Position und die Verformung der ersten Reibelemente (5) unter Last derart ändert, dass sie unter Last die Bauhöhe der zweiten Reibelemente (6) aufweisen.

7. Reibring nach Anspruch 1, **dadurch gekennzeichnet, dass** zumindest einige erste Reibelemente (5) angefedert sind.

8. Reibring nach Anspruch 1, **dadurch gekennzeichnet, dass** die ersten und zweiten Reibflächen (27, 28) gemeinsam auf einem Reibelement (4) angeordnet sind.

9. Reibring nach Anspruch 1, **dadurch gekennzeichnet, dass** der Ringkörper (2) spanlos und umformtechnisch aus Blech hergestellt ist.

10. Reibring nach Anspruch 1, **dadurch gekennzeichnet, dass** der Ringkörper (2) unterschiedlich große Ausnehmungen (3) für die ersten (5) und zweiten (6) Reibelemente aufweist.

11. Reibring nach Anspruch 1, **dadurch gekennzeichnet, dass** mindestens eines der Reibelemente (4) zwei Reibschichten (25, 26) und ein Federelement (10) aufweist, wobei durch das Federelement (10) die erste Reibschicht (25) bereits bei geringem Anpressdruck mit dem Reibpartner reibt und die zweite Reibschicht (26) erst bei höherem Anpressdruck.

12. Reibring nach Anspruch 11, **dadurch gekennzeichnet, dass** das Federelement (10) durch das erste elastische Reibmaterial (25) selbst gebildet ist.

13. Ringkörper für einen Reibring nach Anspruch 1.

14. Synchronisierung mit zumindest einem Reibring nach Anspruch 1 und einem eine Gegenreibfläche (9) aufweisenden Gegenkonus (8), **dadurch gekennzeichnet, dass** die Gegenreibfläche (9) nicht nachbearbeitet ist.

15. Kupplung mit einem Reibring (1) nach Anspruch 1.

## Claims

1. Friction ring (1) for a clutch, in particular for a synchronizing device of a motor vehicle gearbox, having a ring body (2), the ring body (2) having a plurality of recesses (3), and friction elements (4) being arranged in the recesses (3), the ring body (2) forming a cage which guides the friction elements (4) in the recesses (3), the friction elements (4) being arranged in a slidable and/or rotatable manner in the recesses (3), **characterized in that**, in the unloaded state, first friction surfaces (27) project further out of the plane of the ring body (2) than second friction surfaces (28), and in the event of a predetermined load being exceeded, all of the friction surfaces (27, 28) can be placed in frictional contact with a friction partner (19, 21).

2. Friction ring according to Claim 1, **characterized in that** the friction elements (4) are designed as at least first friction elements (5) and second friction elements (6), the first friction elements (5), in the unloaded state, projecting further out of the plane of the ring body (2) in relation to the friction partner than the second friction elements (6).

3. Friction ring according to Claim 2, **characterized in that** the first friction elements (5) have a higher coefficient of friction than the second friction elements (6).

4. Friction ring according to Claim 2, **characterized in that** the first friction elements (5) have a lower coefficient of friction than the second friction elements (6).

5. Friction ring according to Claim 1, **characterized in that** the friction elements (4) are of elastic design.

6. Friction ring according to Claim 1, **characterized in that** the height difference between the first friction elements (5) and the second friction elements (6) as measured in the direction of the friction partner, and in the unloaded state, is such that the position and the deformation of the first friction elements (5) changes under load in such a way that, under load, said first friction elements have the structural height of the second friction elements (6).

7. Friction ring according to Claim 1, **characterized in that** at least some first friction elements (5) are mounted in a spring-loaded manner.

8. Friction ring according to Claim 1, **characterized in that** the first and second friction surfaces (27, 28) are arranged together on one friction element (4).

9. Friction ring according to Claim 1, **characterized in that** the ring body (2) is produced from sheet metal in a non-cutting process and by deformation.

10. Friction ring according to Claim 1, **characterized in that** the ring body (2) has recesses (3) of different sizes for the first (5) and second (6) friction elements.

11. Friction ring according to Claim 1, **characterized in that** at least one of the friction elements (4) has two friction layers (25, 26) and one spring element (10), wherein by means of the spring element (10), the first friction layer (25) comes into frictional contact with the friction partner already at a low contact pressure, and the second friction layer (26) comes into frictional contact with the friction partner only at a relatively high contact pressure.

12. Friction ring according to Claim 11, **characterized in that** the spring element (10) is formed by the first elastic friction material (25) itself.

13. Ring body for a friction ring according to Claim 1.

14. Synchronizing ring having at least one friction ring according to Claim 1 and having a counterpart cone (8) which has a counterpart friction surface (9), **characterized in that** the counterpart friction surface (9) does not undergo a finishing process.

15. Clutch having a friction ring (1) according to Claim 1.

## Revendications

1. Bague de friction (1) pour un accouplement, en particulier pour un dispositif de synchronisation d'une transmission de véhicule automobile, comprenant un corps de bague (2), le corps de bague (2) présentant plusieurs évidements (3) et des éléments de friction (4) étant disposés dans les évidements (3), le corps de bague (2) formant une cage qui guide les éléments de friction (4) dans les évidements (3), les éléments de friction (4) étant disposés de manière déplaçable et/ou rotative dans les évidements (3), **caractérisée en ce que** dans l'état non contraint, des premières surfaces de friction (27) font saillie hors du plan du corps de bague (2) dans une plus grande mesure que des deuxièmes surfaces de friction (28) et en cas de dépassement d'une contrainte prédéterminée, toutes les surfaces de friction (27, 28) peuvent être amenées en contact de friction avec un partenaire de friction (19, 21).

2. Bague de friction selon la revendication 1, **caractérisée en ce que** les éléments de friction (4) sont réalisés au moins sous forme de premiers éléments de friction (5) et deuxièmes éléments de friction (6), les premiers éléments de friction (5) faisant saillie dans l'état non contraint hors du plan du corps de bague (2) par rapport au partenaire de friction dans une plus grande mesure que les deuxièmes éléments de friction (6).

3. Bague de friction selon la revendication 2, **caractérisée en ce que** les premiers éléments de friction (5) présentent un coefficient de friction plus élevé que les deuxièmes éléments de friction (6).

4. Bague de friction selon la revendication 2, **caractérisée en ce que** les premiers éléments de friction (5) présentent un plus faible coefficient de friction que les deuxièmes éléments de friction (6).

5. Bague de friction selon la revendication 1, **caractérisée en ce que** les éléments de friction (4) sont réalisés sous forme élastique.

6. Bague de friction selon la revendication 1, **caractérisée en ce que** la différence de hauteur entre les premiers éléments de friction (5) et les deuxièmes éléments de friction (6), mesurée dans la direction du partenaire de friction dans l'état non contraint, est réalisée de telle sorte que la position et la déformation des premiers éléments de friction (5) varie en charge de telle sorte qu'ils présentent en charge la hauteur de construction des deuxièmes éléments de friction (6).

7. Bague de friction selon la revendication 1, **caractérisée en ce qu'**au moins quelques uns des premiers éléments de friction (5) sont supportés par ressort.

8. Bague de friction selon la revendication 1, **caractérisée en ce que** les premières et deuxièmes surfaces de friction (27, 28) sont disposées ensemble sur un élément de friction (4).

9. Bague de friction selon la revendication 1, **caractérisée en ce que** le corps de bague (2) est fabriqué en tôle sans enlèvement de copeaux et par une technique de façonnage.

10. Bague de friction selon la revendication 1, **caractérisée en ce que** le corps de bague (2) présente des évidements de différentes tailles (3) pour les premiers (5) et les deuxièmes (6) éléments de friction.

11. Bague de friction selon la revendication 1, **caractérisée en ce qu'**au moins l'un des éléments de friction (4) présente deux couches de friction (25, 26) et un élément de ressort (10), la première couche de friction (25) frottant sous l'effet de l'élément de ressort (10) déjà pour une faible pression de pressage avec le partenaire de friction, et la deuxième couche de friction (26) ne frottant qu'à partir d'une pression de pressage plus élevée.

12. Bague de friction selon la revendication 11, **caractérisée en ce que** l'élément de ressort (10) est lui-même formé par le premier matériau de friction élastique (25).

13. Corps de bague pour une bague de friction selon la revendication 1.

14. Synchronisation comprenant au moins une bague de friction selon la revendication 1 et un cône conjugué (8) présentant une surface de friction conjuguée (9), **caractérisé en ce que** la surface de friction conjuguée (9) n'est pas post-usinée.

15. Accouplement comprenant une bague de friction (1) selon la revendication 1.
